(19) Europäisches Patentamt

European Patent Office

Office européen des brevets

(11) **EP 1 691 352 A1**

(12) **EUROPEAN PATENT APPLICATION**
published in accordance with Art. 158(3) EPC

(43) Date of publication:
**16.08.2006 Bulletin 2006/33**

(51) Int Cl.:
*G11B 7/004* (2006.01)     *G11B 7/007* (2006.01)
*G11B 7/24* (2006.01)

(21) Application number: **04819803.0**

(22) Date of filing: **29.11.2004**

(86) International application number:
**PCT/JP2004/017716**

(87) International publication number:
**WO 2005/055209 (16.06.2005 Gazette 2005/24)**

(84) Designated Contracting States:
**DE ES FR GB IT NL**

(30) Priority: **03.12.2003 JP 2003405229**
**09.07.2004 JP 2004203662**

(71) Applicant: **Ricoh Company, Ltd.**
**Tokyo 143-8555 (JP)**

(72) Inventors:
• **SHINOTSUKA, Michiaki**
**Hiratsuka-shi,**
**Kanagawa 2540814 (JP)**

• **SHINKAI, Masaru;**
**Yokohama-shi, Kanagawa 2400045; (JP)**
• **IWASA, Hiroyuki**
**Reciente Chigasaki 408**
**Yokohama-shi,**
**Kanagawa 2240032 (JP)**

(74) Representative: **Barz, Peter**
**Patentanwalt**
**Kaiserplatz 2**
**80803 München (DE)**

(54) **OPTICAL RECORDING MEDIUM, AND RECORDING/REPRODUCING METHOD FOR OPTICAL RECORDING MEDIUM AND OPTICAL RECORDING/ REPRODUCING DEVICE**

(57)     The present invention is aimed at providing a dual-layer phase-change optical recording medium which allows a high-density recording and a recording, where the optical recording medium has a high recording sensitivity even to a low power light with a short wavelength such as blue laser beam, does not cause noises such as jitter, has superior overwrite performance and favorable archivability, allows easier focusing and tracking and enables a compatibility with a ROM. Therefore, it provides an optical recording medium including a substrate and, on the substrate at least a first recording composite layer, an intermediate layer, a second recording composite layer and a cover substrate in this order, wherein the groove depth of the cover substrate is such that the magnitude of a push-pull signal of the first recording composite layer is equal or greater with respect to a push-pull signal of the second recording composite layer.

FIG. 1

**Description**

Technical Field

The present invention relates to a single-sided dual-layer optical recording medium for high-density recording having two recording layers such as re-writable DVD's as well as a recording and reproducing method and an optical recording and reproducing apparatus of the optical recording medium, wherein the single-sided dual-layer optical recording medium is hereinafter also referred to as a phase-change optical information recording medium, phase-change optical recording medium, optical information recording medium or information recording medium.

Background Art

In general, CD's and DVD's record binary signals and detect tracking signals by using the reflectivity changes caused by the light interference from the bottom of a concave pit and a mirror surface. Recently, phase-change re-writable compact discs (CD-Rewritable or CD-RW) are on the verge of being extensively used, and various phase-change re-writable DVD's have been proposed. Also, Nonpatent Literature 1 proposes a system high-density DVR with a capacity of 20 GB or greater by shortening the recording and reproducing wavelength to 350 nm to 420 nm as well as increasing the numerical aperture while the capacity of a DVD is 4.7 GB.

These phase-change re-writable CD's, DVD's and DVR's detect signals of recorded information by using the changes in reflectivity difference and phase difference caused by the refractive index difference between an amorphous and crystal states. A conventional phase-change optical recording medium has a structure including a lower protective layer, a phase-change recording layer, an upper protective layer and a reflective layer, and the compatibility between CD's and DVD's may be maintained by controlling the reflectivity difference and the phase difference through multiple interferences among these composite layers. Regarding the CD-RW with the reflectivity reduced to around 15 % to 25 %, the compatibilities of recording signals and groove signals with CD's are ensured, and a reproducing is possible with a CD drive with an amplification system which covers the low reflectivity. Here, a recording in a phase-change optical recording medium such as CD-RW and re-writable DVD include an overwrite (O/W) recording in which a recording and an erasing are performed simultaneously since the phase-change optical recording medium may perform erasing and re-recording processes only by means of the intensity modulation of one conversing light beam.

Also, a crystalline state, an amorphous state or a mixed state thereof may be used for a phase-change information recording, and multiple crystalline states may also be used. However, a phase-change re-writable optical recording medium generally regards a crystalline state as non-recording and erased states and performs a recording by forming an amorphous mark.

As a material for the phase-change recording layer, a chalcogen element, i.e. S, Se or a chalcogenide alloy including Te, is often used. Examples thereof include a GeSbTe system having a GeTe-$Sb_2Te_3$ pseudobinary alloy as a main component, AgInSbTe system having an $Sb_{0.7}Te_{0.3}$ eutectic alloy as a main component and a GeSbTe system. Among these, a GeTe-$Sb_2Te_3$ pseudobinary alloy with excess Sb, in particular having compositions near intermetallic compounds such as $Ge_1Sb_2Te_4$ and $Ge_2Sb_2Te_5$, has mainly been of practical use. Since these compositions are characterized by crystallization with no phase separation, which is specific to intermetallic compounds, and a high crystal growth rate, an initialization is easy, and the recrystallization speed is high. Therefore, pseudobinary alloy systems and intermetallic compounds with neighboring compositions have been conventionally drawing attention as a recording layer showing practical overwrite performance (Nonpatent Literature 2).

In addition, Patent Literatures 1 to 4 report a conventional recording layer composition which includes a GeSbTe ternary composition or includes additive elements in addition to the ternary composition as a base. However, materials having such compositions are still in an early phase of development, and there are many problems to be solved for the application to a high-density optical recording medium such as re-writable DVR.

In particular, an optical system having a short wavelength such as blue laser beam has a disadvantage of frequent noises in a recording layer due to low beam power. Also, when a protective layer between a substrate and a recording layer viewed from the side of the incoming light is thickened, it is difficult to satisfy simultaneously the overwrite performance and the preservation property due to more variations in the thickness of the protective layer and preservation difficulties, and this has been a challenge in high-speed and high-density recording.

Regarding an optical recording medium which allows a single-sided dual-layer optical recording, the reflectivity is low at 5 % to 7 %, which is less than half of that of a conventional optical recording medium. Considering a focus jump between two layers, it is also a problem that focus and tracking are difficult with small push-pull signals in jumping to the second recording layer.

Regarding such single-sided dual-layer optical recording medium, Patent Literature 5 discloses a single-sided dual-layer optical disc including two recording layers. Also, Patent Literature 6 discloses an optical data recording medium including a first writable data recording layer and a second writable data recording layer. In addition, Patent Literature 7 discloses an optical information medium including two phase-change recording layers which are sandwiched between two dielectric layers.

These single-sided dual-layer optical recording media is required to increase the transmittance of the recording layer on the side of an incoming light, i.e. second recording composite layer, for recording so that the light reaches the recording layer opposite to the side of the incoming light, i.e. first recording composite layer. However, the recording layer and furthermore a heat-releasing layer should be sufficiently thick for satisfactory recording, or there is a problem that recording and reproducing properties such as jitter and modulation are insufficient.

Therefore, a dual-layer optical recording medium for high-density recording which has a high recording sensitivity to a red laser beam for a dual-layer DVD+RW or a low-power light having a short wavelength such as a blue laser beam, does not cause noises such as jitter, has superior overwrite performance and favorable archivability, allows easier focusing and tracking and enables a compatibility with a ROM has not yet been achieved, and a prompt supply thereof is desired.

| | |
|---|---|
| Patent Literature 1 | Japanese Patent Application Laid-Open (JP-A) No. 61-258787 |
| Patent Literature 2 | JP-A No. 62-152786 |
| Patent Literature 3 | JP-A No.01-63195 |
| Patent Literature 4 | JP-A No. 01-211249 |
| Patent Literature 5 | JP-A No. 2003-141775 |
| Patent Literature 6 | Japanese Patent (JP-B) No. 3216794 |
| Patent Literature 7 | JP-A No. 2002-515623 |
| Nonpatent Literature 1 | ISOM Technical Digest, '00 (2000), p. 210 |
| Nonpatent Literature 2 | SPIE, vol. 2514 (1995), pp. 294 to 301 |

Disclosure of Invention

The present invention is aimed at resolving the conventional problems and providing a single-sided dual-layer optical recording medium which allows a high-density recording and a recording and reproducing method of the optical recording medium, where the optical recording medium, in response to the above requirements, has a high recording sensitivity even to a low power light with a short wavelength such as blue laser beam, does not cause noises such as jitter, has superior overwrite performance and favorable archivability, allows easier focusing and tracking and enables a compatibility with a ROM.

The inventors of the present invention found out as a result of keen examinations for resolving the problems that an addition of groove conditions to an optical recording medium including a substrate and, on the substrate, at least a first recording composite layer, an intermediate layer and a second recording composite layer disposed in this order allows easier focusing and tracking and enables a compatibility with a ROM.

The present invention is based on the findings by the inventors of the present invention, and the means solving the problems are as follows. That is:

<1> An optical recording medium including a substrate and, on the substrate at least a first recording composite layer, an intermediate layer, a second recording composite layer and a cover substrate in this order, wherein the groove depth of the cover substrate is such that the magnitude of a push-pull signal of the first recording composite layer is equal or greater with respect to a push-pull signal of the second recording composite layer. With the addition of groove conditions to the dual-layer optical recording medium, the optical recording medium according to <1> has a high recording sensitivity even to a low power light with a short wavelength such as blue laser beam, does not cause noises such as jitter, has superior overwrite performance and favorable archivability, allows easier focusing and tracking and enables a compatibility with a ROM.

<2> The optical recording medium according to <1>, wherein the groove depth of the substrate ($d_1$) and the groove depth of the cover substrate ($d_2$) satisfy the following equations with regard to a light entering from the side of the cover substrate:

$$d_1 > d_2;$$

$$0 < d_1 \leq 7\lambda/8n;$$

and

$$0<d_2\leq 7\lambda/8n,$$

wherein $\lambda$ represents a recording and reproducing wavelength; n represents a refractive index of the substrate; and the cases with $\lambda/4n$, $\lambda/2n$ and $3\lambda/4n$ are excluded.

<3> The optical recording medium according to any one of <1> to <2>, wherein the first recording composite layer includes a reflective layer, a first interfacial layer, a first protective layer, a first recording layer and a second protective layer in this order from the side of the substrate.

<4> The optical recording medium according to <3>, wherein the first recording layer includes 60 % by mole or greater of $Sb_{70}Te_{30}$.

<5> The optical recording medium according to any one of <1> to <4>, wherein the second recording composite layer includes a third protective layer, a heat-releasing layer, a fourth protective layer, a second recording layer and a fifth protective layer in this order from the side of the intermediate layer.

<6> The optical recording medium according to <5>, wherein the second recording layer includes 40 % by mole or greater of $Ge_{50}Te_{50}$.

<7> The optical recording medium according to any one of <3> to <6>, wherein the first recording layer and the second recording layer include 0.1 % by atom to 5 % by atom of at least one element selected from O, N and S.

<8> The optical recording medium according to any one of <3> to <6>, wherein the first recording layer and the second recording layer include at least one element selected from V, Nb, Ta, Cr, Co, Pt and Zr.

<9> The optical recording medium according to any one of <5> to <8>, wherein the optical recording medium includes a second interfacial layer between the heat-releasing layer and the fourth protective layer.

<10> The optical recording medium according to any one of <3> to <9>, wherein the first protective layer, the second protective layer, the fourth protective layer and the fifth protective layer include a mixture of ZnS and $SiO_2$.

<11> The optical recording medium according to any one of <5> to <10>, wherein the third protective layer includes any one selected from ITO and IZO.

<12> The optical recording medium according to any one of <3> to <11>, wherein at least any one of the first interfacial layer and the second interfacial layer includes at least any one selected from a mixture of TiC and $TiO_2$, a mixture of ZrC and $ZrO_2$, a mixture of SiC and $SiO_2$ and a mixture of CrC and $CrO_2$.

<13> The optical recording medium according to any one of <3> to <12>, wherein the reflective layer and the heat releasing layer include any one of Au and an Au alloy, Ag and an Ag alloy, and Cu and an Cu alloy.

<14> A recording and reproducing method of an optical recording medium including: irradiating a light beam from the side of the cover substrate; and at least any one of recording and reproducing information in each recording composite layer of the optical recording medium according to any one of <1> to <13>.

In the recording and reproducing method of an optical recording medium of the present invention, at least a recording or a reproducing of information is performed by irradiating a laser beam to the optical recording medium of the present invention. As a result, at least a recording or a reproducing of information may be efficiently performed in a stable and reliable manner.

<15> An optical recording and reproducing apparatus including:

irradiating a laser beam from a light source to an optical recording medium; and at least any one of recording and reproducing information in the optical recording medium, wherein the optical recording medium is the optical recording medium according to any one of <1> to <13>.

In an optical recording reproducing apparatus which irradiates a laser beam from a light source to an optical recording medium and performs at least any one of recording and reproducing of information in the optical recording medium, an optical recording and reproducing apparatus of the present invention uses an optical recording medium of the present invention as the optical recording medium. In the optical recording apparatus of the present invention, at least a recording or a reproducing of information may be efficiently performed in a stable and reliable manner.

Brief Description of Drawings

FIG. 1 is a cross-sectional diagram showing an example of the layer composition of a dual-layer optical recording medium of the present invention.

FIG. 2 is a cross-sectional diagram showing the layer composition of a dual-layer optical recording medium of Example.

FIG. 3 is a diagram showing the relation of the groove depth of the substrate on the side of the incident light having a wavelength of 405 nm and a numerical aperture of 0.65 with push-pull signals as well as RF signals.

FIG. 4 is a diagram showing the relation of the groove depth of the substrate on the opposite side of the incident light having a wavelength of 405 nm and a numerical aperture of 0.65 with push-pull signals as well as RF signals.

Best Mode for Carrying Out the Invention

(Optical recording medium)

An optical recording medium of the present invention includes: a substrate; at least a first recording composite layer, an intermediate layer, a second recording composite layer on the substrate; and a cover substrate, in this order. It further includes other layers according to requirements.

The groove depth of the cover substrate is such that the magnitude of a push-pull signal of the first recording composite layer is equivalent or greater with respect to a push-pull signal of the second recording composite layer. This can improve the focusing and tracking of in the two recording layers.

Regarding the 'equivalence,' since the maximum measurement error of a push-pull signal is around 3 % and the push-pull signals of the first recording composite layer and the second recording composite layer are 97 % when measured 3 % less or 103 % when measured 3 % more, respectively, the maximum difference between them is 6 %. Therefore, they are considered equivalent when the difference of measurement values falls within 6 %.

More specifically, in a structure in which a light is irradiated from the side of the cover substrate, when the relation of the groove depth of the substrate ($d_1$ and the groove depth of the cover substrate ($d_2$) is $d_1 > d_2$, the groove depth of the substrate which is on the opposite side of the incident light is deeper, and the push-pull signal of the first recording composite layer is greater than the push-pull signal of the second recording composite layer. Since a reproducing signal from the first recording composite layer is reduced by about 40 % to 60 % after it passes the second recording composite layer, the push-pull signal of the first recording composite layer may be approximated to the push-pull signal of the second recording composite layer, and the focusing and tracking are stabilized. Furthermore, a recorded RF signal may be brought to a reproducible level. In this regard, however, the push-pull signal is zero when the groove depth is $\lambda/4n$, $\lambda/2n$ or $3\lambda/4n$, where $\lambda$ represents a recording and reproducing wavelength; n represents the refractive index of the substrate; therefore these groove depths are excluded. Also, the groove depth is greater than zero and $7\lambda/8n$ or less. It is also possible to configure such that $d_2 > d_1$, but the layer having a larger push-pull signal is arranged preferably on the opposite side since the push-pull signal may be more easily obtained with larger groove depth.

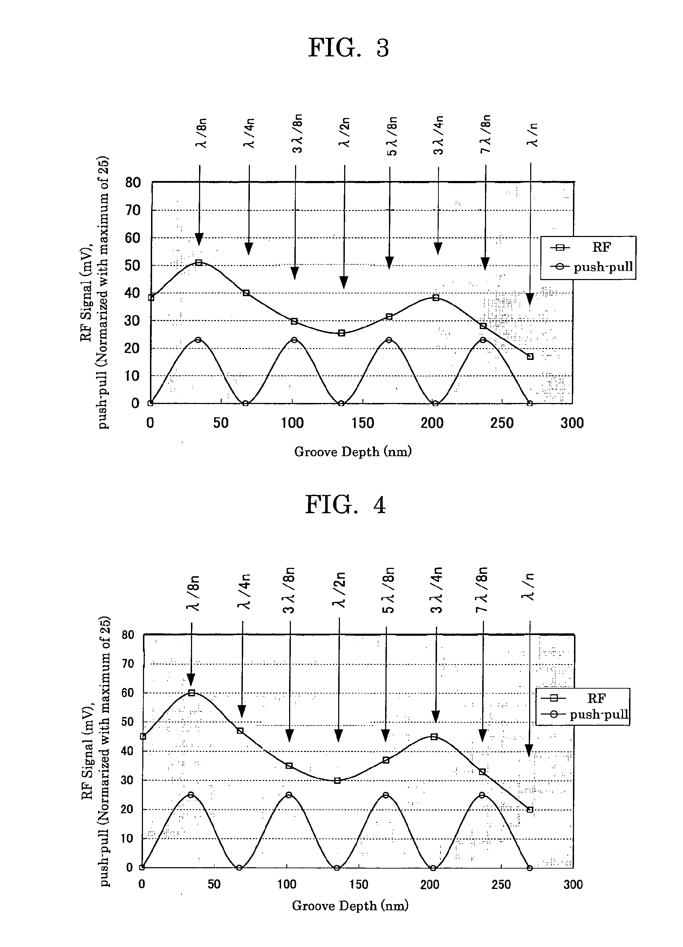

FIG. 3 shows the groove depth of the substrate on the side of the incident light having a wavelength of 405 nm and a numerical aperture of 0.65, push-pull signals and RF signals. FIG. 4 shows the groove depth of the substrate on the opposite side of the incident light having a wavelength of 405 nm and a numerical aperture of 0.65, push-pull signals and RF signals.

Within the range of the groove depth shown in FIGs. 3 and 4, the maximum value of the push-pull signal of the second recording composite layer on the light incident side is 23, and the push-pull signal of the first recording composite layer on the opposite of the light incident side is 25. The values for the first recording composite layer were slightly larger, and focusing and tracking were stable in both the first and second recording composite layers. Also, the RF signals for the first and second recording composite layers were within a range where a recording and reproducing was possible. Here, a larger RF signal is preferable for reproducing. In FIGs. 3 and 4, the RF signals for the both first and second recording composite layers are increased and the magnitudes of the push-pull signals become almost equivalent when the groove depths of the cover substrate and the substrate are 30 nm and 40 nm, respectively; therefore the properties improve.

The first recording composite layer in the optical recording medium of the present invention includes at least a first interfacial layer, a first protective layer, a first recording layer and a second protective layer in this order from the substrate, and it further includes other layers according to requirements.

Also, the second recording composite layer includes at least a third protective layer, a heat releasing layer, a fourth protective layer, a second recording layer and a fifth protective layer in this order from the intermediate layer, and it further includes other layers according to requirement.

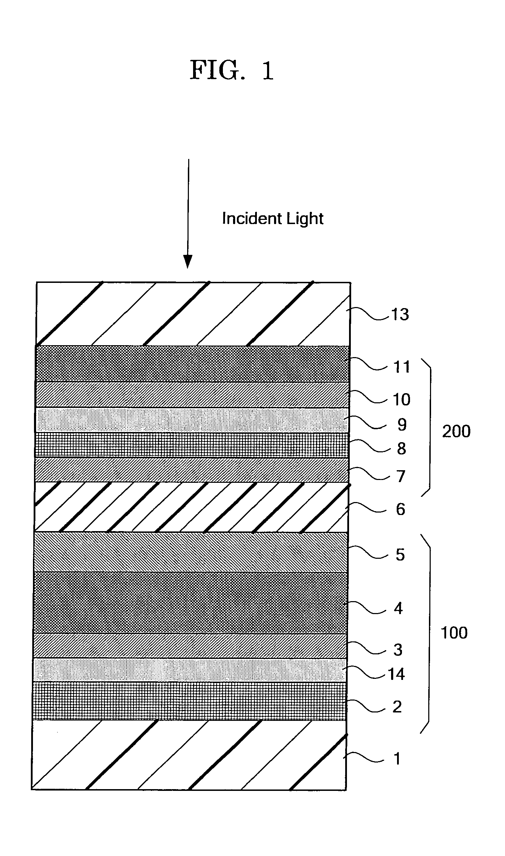

FIG. 1 schematically shows the cross-section of the layer composition as an example of the optical recording medium of the present invention. This optical recording medium has a structure including: a substrate 1, a reflective layer 2, a first interfacial layer 14, a first protective layer 3, a first recording layer 4, a second protective layer 5, an intermediate layer 6, a third protective layer 7, a heat releasing layer 8, a fourth protective layer 9, a second recording layer 10, a fifth protective layer 11 and a cover substrate 13. Furthermore, it may include a second interfacial layer (not shown) between the heat releasing layer 8 and the fourth protective layer 9.

-Substrate-

As a material for the substrate 1, polycarbonate resins, acrylic resins, transparent resins such as polyolefin resins or a transparent glass may be used, for example. Among these, polycarbonate resins are the most favorable material since it is most extensively used for CD's and cost less.

A groove having a pitch of 0.8 $\mu$m or less for guiding a recording and reproducing light is usually allocated in the substrate 1, and the groove does not have to be a geometric groove having a rectangular or trapezoidal shape. For example, a groove may be optically formed as a waveguide having a different refractive index by means of ion implantation.

When an object lens with a high numerical aperture is used, the cover substrate 13 has a sheet shape with a thickness of preferably 0.3 mm or less, and more preferably 0.06 mm to 0.20 mm. When the numerical aperture is around 0.6 to 0.65, a substrate having a thickness of 0.6 mm is used.

-First recording layer-

Preferable examples of a phase-change recording material used for the first recording layer include an alloy having Sb and Te as main components, and the content of $Sb_{70}Te_{30}$ is preferably 60 % by mole or greater, and more preferably 60 % by mole to 90 % by mole. The content increased to 60 % by mole or greater abruptly improves the overwrite performance, and the content exceeding 90 % by mole may degrade the overwrite performance again.

Among these, a material having Sb, Te and Ge as constituting elements is preferable. To a recording layer including such constituting elements, other elements may be added up to about 10 % by atom according to requirements. Also, the optical constants of the first recording layer may be finely adjusted with an addition of 0.1 % by atom to 5 % by atom of at least one element selected from O, N and S to the first recording layer. However, an addition exceeding 5 % by atom is not preferable since it reduces the crystallization speed and degrades the erase performance.

Also, an addition of 8 % by atom or less of at least any one element selected from V, Nb, Ta, Cr, Co, Pt and Zr is preferable in order to improve the temporal stability without decreasing the crystallization speed in overwriting, and the more preferable content is 0.1 % by atom to 5 % by atom. The total content of these elements and Ge with respect to SbTe is preferably 15 % by atom or less. The content exceeding 15 % by atom induces the phase separation of components other than Sb. The addition is particularly effective when the content of Ge is 3 % by atom to 5 % by atom.

-Second recording layer

Preferable examples of a phase-change recording material used for the second recording layer include an alloy having Ge and Te as main components. The content of $Ge_{50}Te_{50}$ is preferably 40 % by mole or greater, and more preferably 40 % by mole to 90 % by mole. The content increased to 40 % by mole or greater improves the overwrite performance even in a layer with high transmittance. When it exceeds 90 % by mole, the overwrite performance may degrade.

Among these, a material consisting only of Ge and Te is preferable. A second recording layer made up of such constituting elements may be added with up to about 10 % by atom of other elements according to requirements. Also, the optical constants of the second recording layer may be finely adjusted with an addition of 0.1 % by atom to 5 % by atom of at least one element selected from O, N and S to the first recording layer. However, an addition exceeding 5 % by atom is not preferable since it degrades the recording and erase performance.

Also, an addition of 20 % by atom or less of at least any one element selected from V, Nb, Ta, Cr, Co, Pt and Zr is preferable in order to improve the temporal stability without decreasing the crystallization speed in overwriting, and the more preferable content is 2 % by atom to 15 % by atom. The content exceeding 15 % by atom induces the phase separation of components of Ge atoms and Te atoms.

Furthermore, as a material to be added to the first and second recording layers, 5 % by atom or less of at least one type of element selected from Si, Sn and Pb for improvement of the temporal stability and fine adjustment of the refractive index. The total content of these elements and Ge is preferably 15 % by atom or less. Here, Si, Sn and Pb are elements having a four-coordinated network similarly to Ge.

Also, an addition of 15 % by atom or less of at least one type of element selected from Al, Ga and In raises the crystallization temperature as well as decreasing the jitter and improving the recording sensitivity. However, it also causes segregation, and the content is preferably 10 % by atom or less.

Also, an addition of 8 % by atom or less of Ag is effective in terms of improving the recording sensitivity, and the effect is particularly prominent when the content of Ge exceeds 5 % by atom. However, the content of Ag exceeding 8 % by atom is not preferable since it increases the jitter and impairs the stability of an amorphous mark. The total content of Ag and Ge exceeding 15 % by atom is not also preferable since it tends to cause the segregation. The content of Ag is most preferably 5 % by atom or less.

The first and second recording layers preferably have a thickness of 5 nm to 100 nm. With the thickness less than 5 nm, a sufficient contrast may not be easily obtained, and moreover the crystallization speed tends to decrease, and an erase in a short period of time may become difficult. On the other hand, with the thickness exceeding 100 nm, an optical contrast may not be easily obtained, and cracks tend to occur. Regarding the contrast, the compatibility with reproducing-only discs such as DVD should be maintained.

In a high-density recording where the shortest mark length is 0.5 $\mu$m or less, the first and second recording layers preferably have a thickness of 5 nm to 25 nm. When the thickness is less than 5 nm, the reflectivity is too low, and the effects of the non-uniform composition and non-dense film at the initial stage of film growth tend to appear. Therefore, it is not preferable. On the other hand, when the thickness exceeds 25 nm, the increased heat capacity degrades the recording sensitivity. Moreover, since the crystal growth becomes three-dimensional, the edge of an amorphous mark is distorted, and the jitter tends to increase. Furthermore, the changes in the volume of the first and second recording layers due to phase change become prominent, and the overwrite durability degrades. Therefore, it is not preferable. The thickness is preferably 20 nm or less in view of the jitter at the edge of a mark and the overwrite durability.

The density of the first and second recording layers is preferably 80 % or greater of the bulk density, and more preferably 90 % or greater. In order to increase the density in a sputtering film-forming method, it is necessary by reducing the pressure of the sputtering gas, e.g. noble gas such as Ar, in film formation or by arranging the substrate close to the front of a target to increase the amount of high-energy Ar irradiated to the recording layers.

The high-energy Ar which reaches the substrate is either Ar ions irradiated to the target for sputtering and partially bounced or Ar ions in plasma accelerated by the sheath voltage in the whole area of the substrate. Such irradiation effect of a high-energy noble gas is called an 'atomic peening effect.' In a generally-used sputtering in an Ar gas, Ar is mixed into a sputtered film due to 'atomic peening effect.' The 'atomic peening effect' may be estimated based on this amount of Ar in the film. That is, a small amount of Ar indicates that the high-energy Ar irradiation effect is small, and a low-density film tends to be formed. On the other hand, too much Ar indicates the irradiation of the high-energy Ar is intense, and despite high density, the Ar entrained in the film is released in repeated overwriting, which causes voids and degrades the re-writing durability. The appropriate amount of Ar in a recording layer film is 0.1 % by atom to 1.5 % by atom. Furthermore, the use of a high-frequency sputtering is preferable to a direct-current sputtering since it reduces the amount of Ar in a film and provides a high-density film.

The state of the first and second recording layers is usually amorphous. Therefore, the whole area of each recording layer should be crystallized after film formation to bring it to an initialized state (non-recorded state). As an initialization method, an initialization by annealing in a solid phase is possible, but an initialization by melting and recrystallization that a recording layer is once melted and then annealed in re-solidification for crystallization is desirable. Each recording layer above scarcely has any nucleus for crystal growth right after the film formation, and the crystallization in a solid phase is difficult. However, according to a melting and recrystallization, by melting after the formation of a few crystal nuclei, the recrystallization proceeds at a high speed, driven by the crystal growth.

Since the reflectivity of a crystal formed by melting and recrystallization above is different from that of a crystal formed by annealing in a solid phase, a mixture thereof causes noises. Also, since the erased portion is a crystal formed by melting and recrystallization in an actual overwrite recording, it is preferable that the initialization is also performed by melting and recrystallization.

In the initialization by melting and recrystallization, the recording layer is melted preferably locally and in a short period of time of about 1 msec or less. This is because the heat destroys the layers and deforms the surface of a plastic substrate when the melted area is too large or the melting or cooling time is too long. In order to provide a thermal history appropriate for initialization, it is desirable to irradiate a high-power semiconductor laser beam having a wavelength of 600 nm to 1,000 nm focused in an ellipsoid having a major axis of 100 $\mu$m to 300 $\mu$m and a minor axis of 1 $\mu$m to 3 $\mu$m and to scan at a linear speed of 1 m/s to 10 m/s with the direction of the minor axis as a scanning axis. The same focused beam having a shape close to a circle is not preferable since the melted area is too large, the layer tends to return to an amorphous state and the damages to the layers in a laminated structure and substrates are severe.

The completion of the initialization by means of melting and recrystallization may be confirmed as follows. That is, on an optical recording medium after initialization, a recording light focused in a spot diameter of less than about 1.5 $\mu$m and having a recording power sufficient for melting a recording layer is irradiated at a constant velocity in a direct current manner. When there is a guide groove, the light is irradiated while a tracking servo or a focus servo is applied to a track composed of the groove or intergroove.

Then, on the same track, an erase light having an erase power of $P_e$ ($P_e \leq P_w$) is irradiated in a direct current manner. When the reflectivity of the obtained erase state is approximately equal to the reflectivity of the totally non-recorded initial state, the initial state is confirmed as a melted and recrystallized state. The reason is that the recording layer which has once been melted by an irradiation of a recording light and recrystallized by an irradiation of an erase light has been through the a recrystallization process of melting by the recording light and recrystallizing by the erase light and that the recording layer is in a melted and recrystallized state. Here, that the reflectivity at an initialized state, $R_{ini}$, and the reflectivity at a melted and recrystallized state, $R_{cry}$, is approximately equal means that the reflectivity difference thereof defined by $(R_{ini}-R_{cry})/[(R_{ini}-R_{cry})/2]$ is 0.2 or less, i.e. 20 % or less. Usually, the reflectivity difference is 20 % or greater solely with the solid state crystallization by annealing.

-First, second, fourth and fifth protective layers-

As shown in FIG. 1, the first recording layer is arranged such that it is sandwiched between the first protective layer and the second protective layer, and the second recording layer is arranged such that it is sandwiched between the fourth protective layer and the fifth protective layer.

These first, second, fourth and fifth protective layers which sandwich the respective recording layers are described below.

The first protective layer has a function of efficiently releasing heat to the reflective layer. Also, the second protective layer is effective mainly in preventing the high temperature in recording from deforming the surface of the intermediate layer. The fourth protective layer has functions of releasing heat to the heat releasing layer and the third protective layer as well as preventing the mutual diffusion between the second recording layer and the heat releasing layer. The fifth protective layer is effective in adjusting the reflectivity and preventing the high temperature in recording from deforming the cover substrate.

Materials for the first, second, fourth and fifth protective layers are determined in terms of refractive index, thermal conductivity, chemical stability, mechanical strength and adhesion. The materials preferably have low thermal conductivity, and the rough indication is $1 \times 10^{-3} pJ/(\mu m\cdot N\cdot nsec)$. It is difficult to measure directly the thermal conductivity of a thin-film material having a low thermal conductivity. The rough indication may be obtained from a thermal simulation and the measurement results of the actual recording sensitivity as an alternative to the direct measurement.

Examples of the materials having a low thermal conductivity include composite dielectrics including heat-resistant compounds which has 50 % by mole to 90 % by mole of at least any one selected from ZnS, ZnO, $TaS_2$ and rare-earth sulfides, is highly transparent and has a melting point or a decomposition point of 1,000 °C or greater. Examples of the rare-earth sulfides include composite dielectrics including 60 % by mole to 90 % by mole of a sulfide of a rare earth such as La, Ce, Nd and Y Among these, a material having 70 % by mole to 90 % by mole of ZnS, ZnO, $TaS_2$ and rare-earth sulfides is particularly preferable.

Examples of the heat-resistant compound having a melting point or decomposition point of 1,000 °C or greater includes oxides, nitrides or carbides of Mg, Ca, Sr, Y, La, Ce, Ho, Er, Yb, Ti, Zr, Hf, V, Nb, Ta, Zn, Al, Si, Ge and Pb; and fluorides of Ca, Mg and Li.

The oxides, sulfides, nitrides, carbides and fluorides do not necessarily have a stoichiometric composition. Alteration of compositions or mixing for the sake of controlling the refractive index is also valid.

The most preferable material for the first, second, fourth and fifth protective layers is a mixture of ZnS and $SiO_2$ in view of the above notes and the consistency with the materials for the first and second recording layers. In view of reducing the manufacturing cost, it is advantageous to use the same materials for each protective layer.

The layer composition of the optical recording medium of the present invention belongs to a type of layer composition called a quench structure. The quench structure provides high erase ratio by means of high-speed crystallization while avoiding the problem of recrystallization in a formation of an amorphous mark by employing a layer composition which promotes the heat release and enhances the cooling speed during the re-solidification of a recording layer.

The film thickness of the first and fourth protective layers significantly affects the durability in repeated overwriting, and it is important particularly in preventing the degradation of the jitter. The film thickness is usually 5 nm to 30 nm. When the film thickness is less than 5 nm, the retardation effect of the thermal conductivity in the protective layer portion is insufficient, and the recording sensitivity significantly degrades. Therefore, it is not preferable. When the film thickness exceeds 30 nm, a sufficient flattening effect of the temperature distribution in the direction of a mark width may not be obtained. Moreover, the protective layers tend to deform asymmetrically due to the difference in the thermal expansion on both sides of the protective layers. A repetition thereof accumulates microscopic plastic deformation within the protective layers and increases noises. Therefore, it is not preferable.

The film thickness of the first and fourth protective layers is preferably 15 nm to 25 nm when the wavelength of a recording laser beam is 600 nm to 700 nm; it is preferably 3 nm to 20 nm, and more preferably 3 nm to 15 nm, when the wavelength is 350 nm to 600 nm.

The film thickness of the second and fifth protective layers is preferably 30 nm to 150 nm, and more preferably 40 nm to 130 nm in terms of the overwrite performance. When the film thickness is less than 30 nm, the protective layers are prone to destruction due to deformation of the recording layers while melting, and the overwrite performance degrades. When the film thickness exceeds 150 nm, the fluctuation of the reflectivity tends to increase, and a uniform recording is difficult.

The jitter may be maintained at a low level in a high-density recording with the shortest mark length of 0.3 $\mu$m or less when the phase-change recording material is used. Further attention should be paid regarding the layer composition of the quench structure when a laser diode having a short wavelength of, for example, 410 nm or less is used to achieve a high-density recording. Particularly in discussing the one-beam overwrite performance of a small focused beam having a wavelength of 500 nm or less and a numerical aperture of 0.55 or greater, a flattening of the temperature distribution in the direction of a mark width is important in order to obtain a high erase ration and a large erase power margin. The tendency is synonymous for a DVR-compliant optical system which uses an optical system having a wavelength of 350 nm to 420 nm and a numerical aperture of around 0.85.

To provide the light transmittance as well as radiation property and to increase the recording sensitivity, Au is used for the heat releasing layer, the second interfacial layer is removed, and the thickness of the heat releasing layer is 2 nm or greater and less than 10 nm, then a design in which the sensitivities of the two recording layers are tuned is possible.

In a high-density mark length modulation recording with an optical system described above, it is important to use a material having a low thermal conductivity is used for the first and fourth protective layers and preferably to have the film thickness to be 3 nm to 20 nm. Thus, the first interfacial layer disposed on the first protective layer should have a high thermal conductivity. This structure prevents the rapid escape of heat in a high-speed recording and allows heat transfer to a reflective layer, and therefore, a high-speed recording becomes possible.

A light which reaches the first recording composite layer is a transmitted light which has transmitted the second recording composite layer, and the amount of the incident light is less than half of the amount of the incident light in the second recording composite layer. Therefore, it is desirable to either increase the incident light of the second recording composite layer or improve the sensitivity of the first recording layer.

In the present invention, the recording sensitivity may be improved by sandwiching the first recording layer with layers having a low thermal conductivity in the first recording composite layer with a small amount of incident light, and the recording sensitivity may also be improved by reducing the film thickness of the first protective layer to 3 nm to 20 nm for easier heat absorption.

In the layer composition above, the radiation effect is promoted by increasing the heat transfer coefficient of the first protective layer or the fourth protective layer in view of only the thermal conductivity. However, the thermal conductivity should be kept low since excessive promotion of the radiation increases the irradiation power required for recording and hence reduces the recording sensitivity significantly.

The use of a thin-film protective layer having a low thermal conductivity gives a temporal delay in the heat transfer from the recording layer to the reflective layer and the heat releasing layer at several nanoseconds to several tens of nanoseconds at the starting point of the recording power irradiation and promotes the radiation to the reflective layer and the heat releasing layer. Therefore, the heat conducting property of the protective layer keeps the reduction of the recording sensitivity to a minimum.

Because of the above reasons, the use of conventionally known protective layer materials having $SiO_2$, $Ta_2O_5$, $Al_2O_3$, AIN and SiN as a main component by themselves is not preferable because of their high thermal conductivity.

-Third protective layer-

Examples of the materials preferable for the third protective layer include ITO (a mixed composition of $In_2O_3$ and SnO) and IZO (a mixed composition of $In_2O_3$ and ZnO), which can raise the light transmittance to 70 % or greater. These materials have a high thermal conductivity, and the heat generated in recording in the second recording layer is released through the heat releasing layer. This provides an optimal quench condition for the recording layer formed with a phase-change material having SbTe which requires rapid quenching as a main component, and a small amorphous mark may be formed.

A thicker third protective layer is more preferable in view of radiation effect, but the thickness exceeding 200 nm increases the stress and causes cracks. Also, the thickness less than 20 nm provides insufficient radiation effect. Therefore, the third protective layer has a thickness of preferably 20 nm to 200 nm, and more preferably 30 nm to 160 nm.

-First and second interfacial layers-

Regarding a phase-change optical recording medium which satisfies the layer composition of the present invention and has a layer composition equivalent to a phase-change optical recording medium having a first interfacial layer and a second interfacial layer with a thickness of 4 nm and composed of $(TiC)_{80}(TiO_2)_{20}$, i.e. the same composition as Example 1, except that the phase-change optical recording medium does not include any one of the first and second interfacial layer, Table 1 shows comparative results of the recording sensitivity in the first recording layer, i.e. the archivability in storing at a temperature of 80°C and a relative humidity (RH) of 85 %.

Here, a random signal was recorded under the following recording and reproducing conditions:

Wavelength of a recording and reproducing light: 405 nm;
Numerical aperture of an object lens: 0.85;

Recording linear velocity: 6.0 m/s;
Recording linear density: 0.160 $\mu$m/bit;
Recording power at which the jitter was the smallest: 9.0 mW;
Reproducing power: 0.5 mW; and
Recording pattern: 1 to 7 modulations.
Also, the jitter is $\sigma/T_w$, i.e. the window width.

Table 1

| Archivability (80°C and 85 % RH) | | | | |
|---|---|---|---|---|
| | With First Interfacial Layer | Without First Interfacial Layer | With Second Interfacial Layer | Without Second Interfacial Layer |
| Initial Jitter (%) | 7.9 | 8.1 | 8.2 | 8.3 |
| Jitter (%) after 300 hours | 7.9 | 25.8 | 8.3 | 26.3 |

The results of Table 1 indicate that the archivability degrades when the first interfacial layer or the second interfacial layer are not included.

When any one of $(TiC)_{80}(TiO_2)_{20}$, $(ZrC)_{80}(ZrO_2)_{20}$, $(SiC)_{80}(SiO_2)_{20}$ and $(CrC)_{80}(CrO_2)_{20}$ is used as a material for the first and second interfacial layers, little alteration due to oxidation is observed even with the use of Ag and Al in the reflective layer and the heat releasing layer since these materials are stable and the amount of oxygen in the materials is small at 10 % by mass or less. The archival storage stability of an optical recording medium in which the above materials were combined with a reflective layer and a heat releasing layer composed of Ag was examined by preserving the medium at a temperature of 80 °C and a relative humidity (RH) of 85 % for 200 hours, and the jitter of a recorded mark did not change, and favorable properties were exhibited.

Heat may be easily released to the reflective layer by thinly forming the first and second interfacial layers such that the film thickness thereof is 2 nm to 15 nm, and preferably 3 nm to 10 nm. When the protective layers include S and the reflective layer includes Ag, Ag is prone to sulfuration. Therefore, the film thickness should be at least 2 nm to suppress the sulfuration reaction. On the other hand, when the layers are too thick, heat tends to remain, and a small mark cannot be recorded. Therefore, it is preferably 15 nm or less for the case of a blue wavelength.

However, as stated above, the radiation property of the second recording composite layer is insufficient only with the radiation property of the third protective layer. In a recording layer composed of a phase-change material, an amorphous mark is formed by means of the initial quenching, and the configuration in which the third protective layer is combined with the heat releasing layer for the sake of improving the radiation property can improve the high-density recording property, overwrite performance and preservation stability.

Reflective layer-

The use of a material with particularly high thermal conductivity in the reflective layer can improve the erase ratio and erase power margin. As a result of examination, it has been found preferable that a layer composition in which the temperature distribution in the direction of the film surface, i.e. in a direction perpendicular to the recording beam scanning direction, is also flattened to the best degree in addition to the temperature distribution in the direction of the film thickness and the time variation in order to bring out a favorable erase performance which the recording layers of the present invention has in a wide range of erase power. Therefore, in the present invention, it is preferable to promote the radiation effect in a lateral direction by using a thin reflective film having an extremely high thermal conductivity and a thickness of 300 nm or less.

In addition, the thermal conductivity of a thin film is generally small compared to the thermal conductivity in a bulk condition. In particular, a thin film having a thickness of less than 40 nm is not preferable since there are cases where its thermal conductivity is smaller by one or more order of magnitude due to the effect of an island structure in the initial stage of the growth. Furthermore, the crystallization property and the amount of impurities vary depending on film-forming conditions, and attention must be paid since films having an identical composition may have a different thermal conductivity.

Although the radiation by means of the reflective layer in the first recording composite layer may be promoted by thickening the reflective layer, the heat conduction in the direction of the film thickness rather than the film surface of the first recording layer becomes apparent with the thickness exceeding 300 nm, and the improvement effect of the temperature distribution in the direction of the film surface may not be obtained. Also, the heat capacity of the reflective layer increases, and the increase in the cooling time of not only the reflective layer but also the first recording layer inhibits the formation of an amorphous mark. It is the most preferable to arrange a thin reflective layer having a high thermal conductivity and to promote selectively the radiation in a lateral direction. A conventional quench structure focuses only on one-dimensional radiation in the direction of the film thickness and intends only the rapid radiation from the first recording layer to the reflective layer, and it has not paid enough attention to the flattening of this temperature distribution in the planar direction.

Examples of a material for the reflective layer include: Au and an Au alloy; Ag and an Ag alloy; Cu and a Cu alloy; and A1 and an A1 alloy. The Ag alloy preferably includes 90 % by atom or more of Ag. Examples of the additive elements include Cu, Pt and Pd.

When Ag or an Ag alloy is used as the reflective layer, the reflective layer preferably has a thickness of 30 nm to 200 nm. When the thickness is less than 30 nm, the radiation effect is insufficient. The thickness exceeding 200 nm does not contribute to the improvement of the heat distribution in the horizontal direction since heat is released more in the perpendicular direction than in the horizontal direction, and an unnecessarily thick film reduces the productivity. Also, the microscopic flatness of the film surface degrades.

Examples of the Al alloy include alloys to which 0.2 % by atom to 2 % by atom of at least one type of element selected from Ta, Ti, Co, Cr, Si, Sc, Hf, Pd, Pt, Mg, Zr, Mo and Mn is added. The volume resistivity increases in proportion to the concentration of the additive elements, and the hillock resistance improves. Therefore, the alloy may be used in view of durability, volume resistivity and film deposition rate. When the content of the additive element is less than 0.2 % by atom, the hillock resistance is often insufficient depending on the film-forming conditions. On the other hand, when the content exceeds 2 % by atom, it becomes difficult to obtain the low resistivity. The additive element is preferably Ta when the temporal stability is important.

Furthermore, Al-Cu alloys including 0.3 % by atom to 5.0 % by atom of Cu are also preferable. In particular, when the protective layer has a dual-layer structure in which a film having a mixed composition of ZnS and $SiO_2$ and a film of $Ta_2O_5$ are laminated, an Al-Cu alloy including 0.5 % by atom to 4.0 % by atom of Cu is desirable since it satisfies the corrosion resistance, the adhesion and the high thermal conductivity in a balanced manner. Also, an Al-Mg-Si alloy including 0.3 % by atom to 0.8 % by atom of Si and 0.3 % by atom to 1.2 % by atom of Mg is also preferable.

When the Al alloy is used as the reflective layer, the film thickness is preferably 150 nm to 300 nm. When the thickness is less than 150 nm, the radiation effect is insufficient. As in the case of the Ag alloy, the thickness exceeding 300 nm does not contribute to the improvement of the heat distribution in the horizontal direction since heat is released more in the perpendicular direction than in the horizontal direction, and an unnecessarily thick film reduces the productivity. Also, the microscopic flatness of the film surface degrades.

Regarding the Ag alloy or the Al alloy used for the reflective layer, it has been confirmed that the volume resistivity increases in proportion to the concentration of the additive elements. On the other hand, the addition of impurities generally reduces the crystal grain size and increases the electron scattering at a grain boundary, and hence it reduces the thermal conductivity. The adjustment of the amount of impurities to be added is required in order to obtain the intrinsic high thermal conductivity of the material by increasing the crystal grain size.

In the second recording layer of the present invention, the crystal growth in re-solidification near the crystallization temperature ($T_m$) is rate-controlling for the recrystallization. A rapid quench structure is effective for steady and clear formation of an amorphous mark and its edge by maximizing the cooling speed near $T_m$. Also, the high-speed erasure near $T_m$ has been possible with the flattening of the temperature distribution in the film surface direction, and the rapid quench structure ensures the erasure by means of recrystallization up to a higher erase power. Therefore, the application of a so-called 'rapid quench structure in view of the retardation effect of the heat conduction in the third protective layer' to the second recording composite layer relating to the present invention enables the favorable transition to an amorphous phase and the formation of a recording mark even with a configuration having a translucent phase-change material.

-Heat releasing layer-

In the present invention, a heat releasing layer is disposed for such rapid quenching. Regarding the formation of the heat releasing layer, it is necessary to resolve the non-uniformity by reducing the deposition rate in the film formation relative to the reflective layer. The film thickness is desirably 2 nm or greater and less than 10 nm. When the film thickness is less than 2 nm, the film is non-uniform even though the deposition rate is reduced. Unless the thickness is less than 10 nm, the transmittance of the second recording composite layer does not increase, and a light does not reach the first recording layer. The transmittance of the second recording composite layer is desirably 40 % or greater.

Examples of a material which are preferable for the rapid quench structure include: Au and an Au alloy; Ag and an Ag alloy; and Cu and a Cu alloy.

Au has a reflectivity of about 37 % with a thickness of 200 nm, which is relatively low compared to Ag, which has a reflectivity of about 88 % with a thickness of 200 nm. However, the absorption of Au is equivalent to that of Ag. Therefore, the high transmittance is ensured when the thickness is 2 nm or greater and less than 10 nm, and it is preferable as a translucent layer of the second recording composite layer.

Regarding Ag or an Ag alloy, it is synonymous to the reflective layer, and the favorable film thickness is 30 nm to 200 nm for the same reasons.

When the A1 alloy is used as the reflective layer, the film thickness is preferably 150 nm to 300 nm. When the thickness is less than 150 nm, the radiation effect is insufficient. As in the case of the A1 alloy, the thickness exceeding 300 nm does not contribute to the improvement of the heat distribution in the horizontal direction since heat is released more in the perpendicular direction than in the horizontal direction. Also, the heat capacity of the reflective heat releasing layer itself increases, and the cooling speed of the recording layer decreases. Moreover, the microscopic flatness of the film surface degrades.

The use of Cu or a Cu alloy as a heat releasing layer is preferable as a translucent layer of the second recording composite layer, provided that the adjacent layers preferably includes neither sulfur (S) nor oxygen (O), since a high transmittance for a red wavelength is ensured with the thickness is 2 nm or greater and less than 10 nm as well as Cu is a material having a higher thermal conductivity among metals.

The reflective layer and the heat releasing layer are usually formed with a sputtering method or a vapor deposition method, and the total impurity content including the amount of impurities of the target and the vapor-deposited materials combined with the moisture and the oxygen entrained during film deposition should be maintained at 2 % by atom or less. Therefore, the ultimate vacuum of the process chamber is desirably $1 \times 10^{-4}$ Pa. Also, when the film formation takes place at an ultimate vacuum of $10^{-4}$ Pa or worse, it is desirable to prevent the impurities from being entrained by increasing the deposition rate to 1 nm/s or greater, and preferably 10 nm/s or greater. Alternatively, when 1 % by atom or greater of additive elements are included by design, it is desirable to prevent the entrainment of additional impurities by increasing the deposition rate to 10 nm/s or greater.

There are cases where the film-forming conditions affect the crystal grain size independently of the content of impurities. For example, an amorphous phase coexists among crystal grains in an alloy film that about 2 % of Ta is mixed with A1, and the ratio of the crystal phase to the amorphous phase depends on the film-forming conditions. Also, sputtering at a lower pressure increases the ratio of the crystal portion, decreases the volume resistance and increases the thermal conductivity.

The composition of impurities or crystallinity in a film also depends on the preparation of the alloy target used for sputtering and the sputtering gas such as Ar, Ne and Xe. Thus, the volume resistance of a thin film cannot be determined solely by the composition of metal materials. It is desirable to reduce the amount of impurities as described above to achieve high thermal conductivity. At the same time, there is a tendency that pure metals such as Ag and A1 are inferior in corrosion resistance and hillock resistance, and it is necessary to determine the optimum composition in view of the balance between the both.

It is also effective to have the reflective layer laminated for further improvement of the thermal conductivity and reliability. In this case, it is composed such that at least one layer has a thickness of 50 % or greater of the total thickness of all the layers and includes the material having a high thermal conductivity which practically contribute to the radiation effect and that other layers contribute to the improvement in the corrosion resistance, adhesion with the reflective layer and hillock resistance.

For example, when Ag having the highest thermal conductivity and the lowest volume resistance among metals is used for the reflective layer and the protective layer adjacent to Ag includes S, the reflective layer is prone to corrosion due to sulfuration of Ag and shows a tendency that the degradation in repeated overwriting is rather quick. It also shows a tendency to cause corrosion in a high temperature and humidity acceleration test environment.

Thus, when Ag or an Ag alloy is used as a low volume resistance material, it is also effective to allocate an Al alloy layer having a thickness of 1 nm to 100 nm as an interfacial layer with the adjacent protective layer. The same materials mentioned for the reflective layer may be used as the A1 alloy. The interfacial layer having a thickness of less than 1 nm provides an insufficient protective effect, and the layer having a thickness exceeding 100 nm sacrifices the radiation effect. Also, when the thickness is 5 nm or greater, the layer may be formed uniformly, avoiding the island structure.

Furthermore, when an Ag-alloy heat releasing layer and an Al-alloy interfacial layer are used, it is further preferable to dispose an interfacial oxidized layer by oxidizing the surface of the Al alloy by 1 nm or more in the thickness since the combination of the Ag and Al interdiffuses relatively easily. The interfacial oxidized layer having a thickness exceeding 5 nm, or especially exceeding 10 nm, is not preferable since it becomes a thermal resistance and sacrifices the primary function as a heat releasing layer with extremely high radiation property.

In order to select a reflective layer and a heat releasing layer having a high thermal conductivity and showing favorable properties in the present invention, it is possible to estimate the quality of the thermal conductivity by means of electric resistance although it is possible to measure the thermal conductivity of each layer directly. This is because a favorable linear relationship holds between the thermal conductivity and electrical conductivity in a material such as metallic film where electrons mainly govern the heat or electric conduction.

A thin-film electric resistivity is expressed as a resistance value normalized by the film thickness and the area of the measured region. The volume resistance and the area resistance may be measured with a common four-point probe method, which is standardized by JIS N7194. This method provides reproducible data far more easily compared to an actual measurement of the thin-film thermal conductivity itself.

As a preferable property of the reflective layer and the heat releasing layer, the volume resistance is preferably 20 nΩ·m to 150 nΩ·m, and more preferably 20 nΩ·m to 100 nΩ· m. It is practically difficult to reduce the volume resistance less than 20 nΩ·m in a thin-film state. Even though the volume resistance exceeds 150 nΩ·m, the area resistance may be decreased by thickening the film, for example, over 300 nm. However, a sufficient radiation effect could not be achieved only by reducing the area resistance of such material with high volumetric resistance. This is presumably because the heat capacity per unit area increases in a thick film. In addition, such thick film consumes time for film formation and increases the material cost. Therefore, it is not preferable in terms of manufacturing cost, and the microscopic flatness of the film surface degrades as well.

It is effective to form the multilayered reflective layer and heat releasing layer in order to obtain a desired area resistance with a desired film thickness by combining a material having a high volume resistance and a material having a low volume resistance. The adjustment of the volume resistance by alloying can simplify a sputtering process due to the use of an alloy target, but it can also be an increasing factor of the target production cost and the material cost of the medium. Therefore, the desired volume resistance may be effectively obtained by laminating a thin film of pure Ag or pure Au and a thin film of the additive elements. Although the initial apparatus cost increases, but there are cases where the medium cost may be reduced when the number of layers is up to three. Preferably, the reflective layer has a laminated structure having multiple metal films and having a total thickness of 40 nm to 300 nm, and one or more metallic thin-film layer having a volume resistance of 20 nΩ·m to 150 nΩ·m makes up 50 % or greater of the total thickness.

A cover substrate preferably has a thickness of 0.3 mm or less, and more preferably 0.06 mm to 0.20 mm when an object lens with high numerical aperture is used in a configuration in which the cover substrate is thinly disposed as shown in FIG. 1. A cover substrate having a thickness of 0.6 mm is used when the numerical aperture is 0.50 to 0.70.

Examples of the material for the cover substrate include polycarbonate resins, acrylic resins, epoxy resins, polystyrene resins, acrylonitrile styrene copolymers, polyethylene resins, polypropylene resins, silicone resins, fluorinated resins, ABS resins and urethane resins. Among these, polycarbonate resins and acrylic resins are preferable in view of superior optical properties and cost.

As a method for forming a thin cover substrate using a transparent sheet composed of these materials, a lamination method in which a transparent sheet is attached through an ultraviolet curing resin or a transparent two-sided adhesive sheet. It is also possible to form a thin cover substrate by applying and curing an ultraviolet curing resin on the protective layer.

The resins may be used for the intermediate layer and an adhesive layer, and ultraviolet curing resins are preferable in terms of cost.

For a blue LD having a wavelength of 405 nm and a numerical aperture of around 0.6 to 0.65, the intermediate layer has a thickness of preferably 20 $\mu$m to 50 $\mu$m, and more preferably 30 $\mu$m to 40 $\mu$m, with which the interference of signals from respective layers may be reduced.

According to the present invention, a phase-change optical recording medium which allows a high density recording may be provided, where the optical recording medium has a high recording sensitivity even to a low power light with a short wavelength such as blue laser, does not cause noises such as jitter, has superior overwrite performance and favorable archivability, allows easier focusing and tracking and enables a compatibility with a ROM.

(Method for recording and reproducing an optical recording medium)

A recording and reproducing method of an optical recording medium of the present invention irradiates a light beam from the side of the cover substrate and performs at least any one of a recording and a reproducing of information in each information layer of the dual-layer optical recording medium.

More specifically, a light for recording such as semiconductor laser having, for example, an oscillating wavelength of 350 nm to 700 nm is irradiated from the side of the cover substrate through the objective lens while the optical recording medium is rotated at a constant linear velocity or a constant angular velocity. This irradiated light is absorbed by the first and second recording layers, causing the local increase in the temperature. This forms an amorphous mark, and information is recorded, for example. The information recorded as above may be reproduced by irradiating a laser beam from the side of the cover substrate to the optical recording medium rotated at a constant linear velocity and by detecting the reflected light.

(Optical recording and reproducing apparatus)

In an optical recording reproducing apparatus, which irradiates a laser beam from a light source to an optical recording medium and performs at least any one of recording and reproducing of information in the optical recording medium, an optical recording and reproducing apparatus of the present invention uses an optical recording medium of the present invention as the optical recording medium.

The optical recording and reproducing apparatus is not particularly restricted and can be appropriately selected according to applications. For example, it includes: a laser source as a light source of a semiconductor laser which emits a laser beam; a condensing lens which condenses the laser beam emitted from the laser source to an optical recording medium mounted on a spindle; an optical element which guides the laser beam emitted from the laser source to the condensing lens and a laser detector; and a laser detector which detects a reflected light of the laser beam. It further includes other units according to requirements.

The optical recording and reproducing apparatus performs a recording on an optical recording medium by guiding a laser beam emitted from the laser source to the condensing lens by means of the optical element and by condensing and irradiating the laser beam to the optical recording medium by means of the condensing lens. At this point, the optical recording and reproducing apparatus guides the reflected light of the laser beam to the laser detector and controls the laser quantity of the laser source based on the laser quantity detected by the laser detector.

The laser detector converts the detected quantity of the laser beam to a voltage or a current and outputs as a detection signal.

Examples of the other units include a controlling unit. The controlling unit is not particularly restricted as long as it can control the operation of the respective units, and it can be appropriately selected according to applications. Examples thereof include a sequencer and a computer for irradiating and scanning an intensity-modulated laser beam.

The present invention will be illustrated in more detail with reference to examples given below, but these are not to be construed as limiting the present invention.

(Example 1)

-Preparation of optical recording medium-

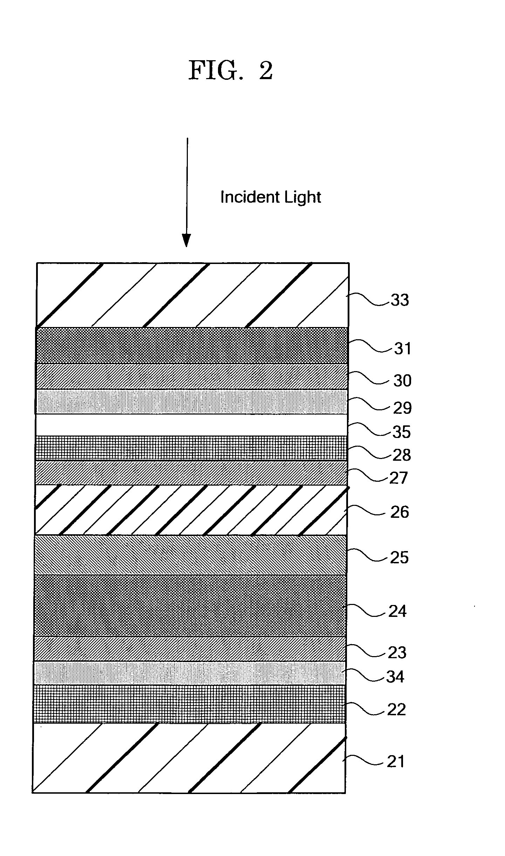

An optical recording medium having a layer composition shown in FIG. 2 was prepared by sequentially forming on a polycarbonate resin substrate 21: a reflective layer 22 ($Ag_{97}Cu_1Pt_1Pd_1$); a first interfacial layer 34 [($TiC)_{80}(TiO_2)_{20}$]; a first protective layer 23 ($ZnS \cdot SiO_2$); a first recording layer 24 ($Ag_5In_5Sb_{65}Te_{25}$); a second protective layer 25 ($ZnS \cdot SiO_2$); an intermediate layer 26 (a UV-curing resin, SD318, manufactured by Mitsubishi Materials Corporation); a third protective layer 27 (IZO); a heat releasing layer 28 ($Ag_{97}Cu_1Pt_1Pd_1$); a second interfacial layer 35 [($TiC)_{80}(TiO_2)_{20}$]; a fourth protective layer 29 ($ZnS \cdot SiO_2$); a second recording layer 30 ($Ge_{43}Te_{43}Sn_{12}N_2$); a fifth protective layer 31 ($ZnS \cdot SiO_2$); and a cover substrate 33 (polycarbonate resin).

The thickness of each layer is shown below. The intermediate layer 26 was formed with a spin-coating method; the cover substrate was laminated through a transparent adhesive sheet (polycarbonate sheet having a thickness of 75 $\mu$m, manufactured by Teijin Limited); and other layers were formed with a sputtering method while controlling their thicknesses.

The layer thicknesses were as follows: the substrate 21: 0.6 mm; the reflective layer 22: 100 nm; the first interfacial layer 34: 2 nm; the first protective layer 23: 10 nm; the first recording layer 24: 14 nm; the second protective layer 25: 60 nm; the intermediate layer 26: 35 $\mu$m; the third protective layer 27: 30 nm; the heat releasing layer 28: 5 nm; the fourth protective layer 29: 8 nm; the second recording layer 30: 12 nm; the fifth protective layer 31: 130 nm; and the cover substrate: 0.6 mm. Also, the substrate had a groove depth $d_1$ of 35 nm, and the cover substrate had a groove depth $d_2$ of 30 nm.

(Example 2)

-Preparation of optical recording medium-

An optical recording medium of Example 2 was prepared in the same manner as Example 1 except that the materials for the first interfacial layer and the third protective layer were changed to $(ZrC)_{80}(ZrO_2)_{20}$ and ITO, respectively, that the interfacial layer was removed and that the heat releasing layer was replaced by Au having a thickness of 5 nm.

(Example 3)

-Preparation of optical recording medium-

An optical recording medium of Example 3 was prepared in the same manner as Example 1 except that the materials for the first interfacial layer and the second interfacial layer were changed to $(SiC)_{80}(SiO_2)_{20}$ and $(CrC)_{80}(CrO_2)_{20}$, respectively and that the groove depths of the substrate and the cover substrate were changed to $d_1 = 75$ nm and $d_2 = 90$ nm, respectively.

(Example 4)

-Preparation of optical recording medium-

An optical recording medium of Example 4 was prepared in the same manner as Example 1 except that the materials for the first interfacial layer and the second interfacial layer were changed to $(SiC)_{80}(SiO_2)_{20}$ and that the groove depths of the substrate and the cover substrate were changed to $d_1 = 160$ nm and $d_2 = 150$ nm, respectively.

(Example 5)

-Preparation of optical recording medium-

An optical recording medium of Example 5 was prepared in the same manner as Example 1 except that the groove depths of the substrate and the cover substrate were changed to $d_1 = 230$ nm and $d_2 = 220$ nm, respectively.

(Example 6)

-Preparation of optical recording medium-

An optical recording medium of Example 6 was prepared in the same manner as Example 1 except that the first interfacial layer was not formed.

(Example 7)

-Preparation of optical recording medium-

An optical recording medium of Example 7 was prepared in the same manner as Example 1 except that the second interfacial layer was not formed.

(Example 8)

-Preparation of optical recording medium-

An optical recording medium of Example 8 was prepared in the same manner as Example 1 except that the groove depths of the substrate and the cover substrate were changed to $d_1 = 100$ nm and $d_2 = 35$ nm, respectively.

(Comparative Example 1)

-Preparation of optical recording medium-

An optical recording medium of Comparative Example 1 was prepared in the same manner as Example 1 except that the first interfacial layer was not formed and that the groove depths of the substrate and the cover substrate were changed to $d_1 = 60$ nm and $d_2 = 50$ nm, respectively.

(Comparative Example 2)

-Preparation of optical recording medium-

An optical recording medium of Comparative Example 1 was prepared in the same manner as Example 1 except that the groove depths of the substrate and the cover substrate were changed to $d_1 = 100$ nm and $d_2 = 40$ nm, respectively.

(Reference Example)

-Preparation of optical recording medium-

An optical recording medium of Reference Example 1 was prepared in the same manner as Example 1 except that the third protective layer and the first and second interfacial layers were not formed.

Regarding each optical recording medium obtained in Examples 1 to 8, Comparative Examples 1 to 2 and Reference Example 1, Table 2 shows the groove depths of the first and second recording composite layers and the ratio of a push-pull signal, i.e. the magnitude of the signal of the first recording composite layer with the magnitude of the signal of the second recording layer regarded as unity.

Here, the wavelength of the optical system was 402 nm, and the refractive index n of a polycarbonate resin is 1.53.

Table 2

| | First Recording composite layer | | Second Recording composite layer | |
|---|---|---|---|---|
| | $d_1$ groove depth (nm) | Push-Pull | $d_2$ graave depth (nm) | Push-Pull |
| Example 1 | 35 | 1.2 | 30 | 1 |
| Example 2 | 35 | 1.2 | 30 | 1 |
| Example 3 | 75 | 4.4 | 90 | 1 |

(continued)

| | First Recording composite layer | | Second Recording composite layer | |
|---|---|---|---|---|
| | $d_1$ groove depth (nm) | Push-Pull | $d_2$ graave depth (nm) | Push-Pull |
| Example 4 | 160 | 1.5 | 150 | 1 |
| Example 5 | 230 | 1.3 | 220 | 1 |
| Example 6 | 35 | 1.2 | 30 | 1 |
| Example 7 | 35 | 1.2 | 30 | 1 |
| Example 8 | 100 | 1.0 | 35 | 1 |
| Comparative Example 1 | 60 | 0.25 | 50 | 1 |
| Reference Example 1 | 35 | 1.2 | 30 | 1 |
| Comparative Example 2 | 100 | 0.8 | 40 | 1 |

The results of Table 2 indicate the groove depth of the first recording composite layer of Comparative Example 1 is 60 nm. However, this value is close to 66 nm ($\approx \lambda/4n$ = 402 nm / (4 × 1.53)), and the tracking is difficult due to the reduced push-pull signal in the second recording composite layer.

Also, the transmittance of the second recording composite layer varies with or without recording in the second recording layer, and the magnitude of the push-pull signal of the first recording composite layer is not easily stabilized unless it is equal to or greater than that of the second recording composite layer.

The component of each layer in each optical recording medium of Examples 1 to 8, Comparative Examples 1 to 2 and Reference Example 1 is shown in Tables 3-1 and 3-2.

Table 3-1

| | Substrate 21 | Reflective Layer 22 | First Interfacial Layer 34 | First, Second, Fourth and Fifth Protective Layers (*) | First Recording Layer 24 | Intermediate Layer 26 |
|---|---|---|---|---|---|---|
| Example 1 | Polycarbonate | $Ag_{97}Cu_1Pt_1Pd_1$ | $(TiC)_{80}(TiO_2)_{20}$ | $ZnSSiO_2$ | $Ag_5In_5Sb_{65}Te_{25}$ | UV Resin (SD318) |
| Example 2 | Polycarbonate | $Ag_{97}Cu_1Pt_1Pd_1$ | $(ZrC)_{80}(ZrO_2)_{20}$ | $ZnSSiO_2$ | $Ag_5In_5Sb_{65}Te_{25}$ | UV Resin |
| Example 3 | Polycarbonate | $Ag_{97}Cu_1Pt_1Pd_1$ | $(SiC)_{80}(SiO_2)_{20}$ | $ZnSSiO_2$ | $Ag_5In_5Sb_{65}Te_{25}$ | UV Resin |
| Example 4 | Polycarbonate | $Ag_{97}Cu_1Pt_1Pd_1$ | $(SiC)_{80}(SiO_2)_{20}$ | $ZnSSiO_2$ | $Ag_5In_5Sb_{65}Te_{25}$ | UV Resin |
| Example 5 | Polycarbonate | $Ag_{97}Cu_1Pt_1Pd_1$ | $(TiC)_{80}(TiO_2)_{20}$ | $ZnSSiO_2$ | $Ag_5In_5Sb_{65}Te_{25}$ | UV Resin |
| Example 6 | Polycarbonate | $Ag_{97}Cu_1Pt_1Pd_1$ | None | $ZnSSiO_2$ | $Ag_5In_5Sb_{65}Te_{25}$ | UV Resin |
| Example 7 | Polycarbonate | $Ag_{97}Cu_1Pt_1Pd_1$ | $(TiC)_{80}(TiO_2)_{20}$ | $ZnSSiO_2$ | $Ag_5In_5Sb_{65}Te_{25}$ | UV Resin |
| Example 8 | Polycarbonate | $Ag_{97}Cu_1Pt_1Pd_1$ | $(TiC)_{80}(TiO_2)_{20}$ | $ZnSSiO_2$ | $Ag_5In_5Sb_{65}Te_{25}$ | UV Resin |
| Comparative Example 1 | Polycarbonate | $Ag_{97}Cu_1Pt_1Pd_1$ | None | $ZnSSiO_2$ | $Ag_5In_5Sb_{65}Te_{25}$ | UV Resin |
| Reference Example 1 | Polycarbonate | $Ag_{97}Cu_1Pt_1Pd_1$ | None | $ZnSSiO_2$ | $Ag_5In_5Sb_{65}Te_{25}$ | UV Resin |
| Comparative Example 2 | Polycarbonate | $Ag_{97}Cu_1Pt_1Pd_1$ | $(TiC)_{80}(TiO_2)_{20}$ | $ZnSSiO_2$ | $Ag_5In_5Sb_{65}Te_{25}$ | UV Resin |

Table 3-2

| | Heat Releasing Layer 28 | Third Protective Layer 27 | Second Recording Layer 30 | Groove Depth ($d_1/d_2$) (nm) | Cover Substrate 33 | Second Interfacial Layer 35 |
|---|---|---|---|---|---|---|
| Example 1 | $Ag_{97}Cu_1Pt_1Pd_1$ | IZO ($In_2O_3$ and ZnO) | $Ge_{43}Te_{43}Sn_{12}N_2$ | 35/30 | Polycarbonate | $(TiC)_{80}(TiO_2)_{20}$ |
| Example 2 | Au | IZO ($In_2O_3$ and ZnO) | $Ge_{43}Te_{43}Sn_{12}N_2$ | 35/30 | Polycarbonate | None |
| Example 3 | $Ag_{97}Cu_1Pt_1Pd_1$ | IZO | $Ge_{43}Te_{43}Sn_{12}N_2$ | 75/90 | Polycarbonate | $(CrC)_{80}(CrO_2)_{20}$ |
| Example 4 | $Ag_{97}Cu_1Pt_1Pd_1$ | IZO | $Ge_{43}Te_{43}Sn_{12}N_2$ | 160/150 | Polycarbonate | $(SiC)_{80}(SiO_2)_{20}$ |
| Example 5 | $Ag_{97}Cu_1Pt_1Pd_1$ | IZO | $Ge_{43}Te_{43}Sn_{12}N_2$ | 230/220 | Polycarbonate | $(TiC)_{80}(TiO_2)_{20}$ |
| Example 6 | $Ag_{97}Cu_1Pt_1Pd_1$ | IZO | $Ge_{43}Te_{43}Sn_{12}N_2$ | 35/30 | Polycarbonate | $(TiC)_{80}(TiO_2)_{20}$ |
| Example 7 | $Ag_{97}Cu_1Pt_1Pd_1$ | IZO | $Ge_{43}Te_{43}Sn_{12}N_2$ | 35/30 | Polycarbonate | None |
| Example 8 | $Ag_{97}Cu_1Pt_1Pd_1$ | IZO ($In_2O_3$ and ZnO) | $Ge_{43}Te_{43}Sn_{12}N_2$ | 100/35 | Polycarbonate | $(TiC)_{80}(TiO_2)_{20}$ |
| Comparative Example 1 | $Ag_{97}Cu_1Pt_1Pd_1$ | IZO | $Ge_{43}Te_{43}Sn_{12}N_2$ | 50/60 | Polycarbonate | $(TiC)_{80}(TiO_2)_{20}$ |
| Reference Example 1 | $Ag_{97}Cu_1Pt_1Pd_1$ | None | $Ge_{43}Te_{43}Sn_{12}N_2$ | 35/30 | Polycarbonate | None |
| Comparative Example 2 | $Ag_{97}Cu_1Pt_1Pd_1$ | IZO ($In_2O_3$ and ZnO) | $Ge_{43}Te_{43}Sn_{12}N_2$ | 100/40 | Polycarbonate | $(TiC)_{80}(TiO_2)_{20}$ |
| (*) The first protective layer: 23; the second protective layer: 25; the fourth protective layer: 29; and the fifth protective layer: 31. | | | | | | |

<Evaluation>

A condensed light beam was irradiated with an optical system having a wavelength of 402 nm and a numerical aperture of 0.65 to each optical recording medium of Examples 1 to 8, Comparative Example 1 to 2 and Reference Example 1 above, and with a linear velocity of 6.0 m/s or 0.160 $\mu$m/bit, the initial jitter, the recording sensitivity (recording power or a power for the smallest jitter), the archivability and overwrite performance were evaluated based on the following criteria. The results are shown in Tables 4-1 and 4-2.

<Archivability criterion>

The time (hour) required until the jitter was increased by 20 % or greater during storage at a temperature of 80 °C and a relative humidity of 85 %.

<Overwrite performance criterion>

The number of overwrites (times) until the jitter was increased by 20 % or greater due to overwriting.

<Recording sensitivity (recording power) criterion>

The power with which the jitter was the minimum.

Table 4-1

| First Recording Composite Layer | | | | | |
|---|---|---|---|---|---|
| Example | Recording Sensitivity (mW) | Initial Jitter (%) | Archivability (H) | Overwrite Performance (times) | Transmittance (%) |
| Example 1 | 7.5 | 6.8 | 2,000 | 10,000 | 48 |
| Example 2 | 8 | 7.1 | 1,500 | 10,000 | 49 |
| Example 3 | 8.5 | 6.9 | 2,000 | 10,000 | 48 |
| Example 4 | 8 | 7.3 | 2,000 | 20,000 | 50 |
| Example 5 | 8.5 | 7.2 | 2,000 | 10,000 | 48 |
| Example 6 | 8 | 7.1 | 2,000 | 10000 | 49 |
| Example 7 | 8.5 | 7.2 | 2,000 | 10,000 | 48 |
| Example 8 | 8.0 | 6.9 | 2,000 | 10,000 | 51 |
| Comparative Example 1 | 9.5 | 7.2 | 150 | 1,000 | 34 |
| Reference Example 1 | 10 | 7.2 | 300 | 1,000 | 38 |
| Comparative Example 2 | 8.5 | 7.1 | 2,000 | 10,000 | 42 |

Table 4-2

| | Second Recording Composite Layer | | | |
|---|---|---|---|---|
| | Recording Sensitivity (mW) | Initial Jitter (%) | Archivability (H) | Overwrite Performance (times) |
| Example 1 | 9.5 | 6.8 | 2,000 | 10,000 |
| Example 2 | 9.5 | 7.1 | 1,500 | 10,000 |
| Example 3 | 10 | 6.9 | 2,000 | 10,000 |
| Example 4 | 9.5 | 7.3 | 2,000 | 20,000 |
| Example 5 | 10 | 7.2 | 2,000 | 10,000 |
| Example 6 | 9.5 | 7.3 | 2,000 | 10,000 |
| Example 7 | 10 | 7.2 | 2,000 | 10,000 |
| Example 8 | 8.5 | 6.9 | 2,000 | 10,000 |
| Comparative Example 1 | * | * | * | * |
| Reference Example 1 | * | * | * | * |
| Comparative Example 2 | 10.5 | 9.1 | 2,000 | 10,000 |
| * A recording could not be performed due to focus failure. | | | | |

The results in Tables 4-1 and 4-2 indicate that the optical recording media of Examples 1 to 8 showed the superior recording sensitivity, archivability and overwrite performance compared to Comparative Example 1.

On the contrary, the optical recording medium of Comparative Example 1 showed the extremely poor preservation property, i.e. archivability, high recording power and unfavorable sensitivity. In addition, the optical recording medium of Comparative Example 2 had the inferior recording sensitivity and initial jitter.

Industrial Applicability

An optical recording medium of the present invention may be extensively used for, for example, CD-RW, DVD+RW, DVD-RW, DVD-RAM and Blu-ray Disc system which uses a blue-purple laser beam.

**Claims**

1. An optical recording medium comprising: a substrate and, on the substrate at least a first recording composite layer, an intermediate layer, a second recording composite layer and a cover substrate in this order, wherein the groove depth of the cover substrate is such that the magnitude of a push-pull signal of the first recording composite layer is equal or greater with respect to a push-pull signal of the second recording composite layer.

2. The optical recording medium according to Claim 1, wherein the groove depth of the substrate ($d_1$) and the groove depth of the cover substrate ($d_2$) satisfy the following equations with regard to a light entering from the side of the cover substrate:

$$d_1 > d_2;$$

$$0 < d_1 \leq 7\lambda/8n;$$

and

$$0 < d_2 \leq 7\lambda/8n,$$

wherein $\lambda$ represents a recording and reproducing wavelength; n represents a refractive index of the substrate; and the cases with $\lambda/4n$, $\lambda/2n$ and $3\lambda/4n$ are excluded.

3. The optical recording medium according to any one of Claims 1 to 2,
   wherein the first recording composite layer comprises a reflective layer, a first interfacial layer, a first protective layer, a first recording layer and a second protective layer in this order from the side of the substrate.

4. The optical recording medium according to Claim 3,
   wherein the first recording layer comprises 60 % by mole or greater of $Sb_{70}Te_{30}$.

5. The optical recording medium according to any one of Claims 1 to 4,
   wherein the second recording composite layer comprises a third protective layer, a heat-releasing layer, a fourth protective layer, a second recording layer and a fifth protective layer in this order from the side of the intermediate layer.

6. The optical recording medium according to Claim 5,
   wherein the second recording layer comprises 40 % by mole or greater of $Ge_{50}Te_{50}$.

7. The optical recording medium according to any one of Claims 3 to 6,
   wherein the first recording layer and the second recording layer comprise 0.1 % by atom to 5 % by atom of an element selected from O, N and S.

8. The optical recording medium according to any one of Claims 3 to 7,
   wherein the first recording layer and the second recording layer comprises an element selected from V, Nb, Ta, Cr, Co, Pt and Zr.

9. The optical recording medium according to any one of Claims 5 to 8,
   wherein the optical recording medium comprises a second interfacial layer between the heat-releasing layer and the fourth protective layer.

10. The optical recording medium according to any one of Claims 3 to 9,
    wherein the first protective layer, the second protective layer, the fourth protective layer and the fifth protective layer comprise a mixture of ZnS and $SiO_2$.

11. The optical recording medium according to any one of Claims 5 to 10,
    wherein the third protective layer comprises any one selected from ITO and IZO.

12. The optical recording medium according to any one of Claims 3 to 11,
    wherein at least any one of the first interfacial layer and the second interfacial layer comprises any one selected from a mixture of TiC and $TiO_2$ a mixture of ZrC and $ZrO_2$, a mixture of SiC and $SiO_2$ and a mixture of CrC and $CrO_2$.

13. The optical recording medium according to any one of Claims 3 to 12,
    wherein the reflective layer and the heat releasing layer comprise any one of Au and an Au alloy, Ag and an Ag alloy, and Cu and an Cu alloy.

14. A recording and reproducing method of an optical recording medium comprising:

    irradiating a light beam from the side of the cover substrate; and
    performing at least any one of recording and reproducing information in each recording composite layer of the optical recording medium according to any one of Claims 1 to 13.

15. An optical recording and reproducing apparatus comprising:

irradiating a laser beam from a light source to an optical recording medium; and
performing at least any one of recording and reproducing information in the optical recording medium,

wherein the optical recording medium is the optical recording medium according to any one of Claims 1 to 13.

# FIG. 1

Incident Light

# FIG. 2

Incident Light

## FIG. 3

## FIG. 4

## INTERNATIONAL SEARCH REPORT

| International application No. |
| --- |
| PCT/JP2004/017716 |

A. CLASSIFICATION OF SUBJECT MATTER
Int.Cl$^7$ G11B7/004, 7/007, 7/24

According to International Patent Classification (IPC) or to both national classification and IPC

B. FIELDS SEARCHED

Minimum documentation searched (classification system followed by classification symbols)
Int.Cl$^7$ G11B7/00-7/013, 7/24

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>· | WO 2002/029789 A1 (Matsushita Electric Industrial Co., Ltd.), 11 April, 2002 (11.04.02), Specifications; page 18, line 3 to page 20, line 2; page 25, line 21 to page 26, line 18; Figs. 10, 15 & EP 1333430 A1 & US 2004/0095876 A1 | 1,2,14,15<br>3-13 |
| Y | JP 2003-303443 A (Ricoh Co., Ltd.), 24 October, 2003 (24.10.03), Full text (Family: none) | 3-13 |

☐ Further documents are listed in the continuation of Box C.   ☐ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 January, 2005 (21.01.05) | Date of mailing of the international search report<br>08 February, 2005 (08.02.05) |
| --- | --- |
| Name and mailing address of the ISA/<br>Japanese Patent Office | Authorized officer |
| Facsimile No. | Telephone No. |

Form PCT/ISA/210 (second sheet) (January 2004)